**Europäisches Patentamt**

**European Patent Office**

**Office européen des brevets**

(19)

(11) Veröffentlichungsnummer: **0 181 314**
**B1**

(12) ## EUROPÄISCHE PATENTSCHRIFT

(45) Veröffentlichungstag der Patentschrift:
**07.12.88**

(51) Int. Cl.⁴: **H 04 B 5/00**

(21) Anmeldenummer: **85890206.7**

(22) Anmeldetag: **05.09.85**

(54) Tunnelantennensystem zur breitbandigen Signalübertragung.

(30) Priorität: **03.10.84 AT 3128/84**

(43) Veröffentlichungstag der Anmeldung:
**14.05.86 Patentblatt 86/20**

(45) Bekanntmachung des Hinweises auf die Patenterteilung:
**07.12.88 Patentblatt 88/49**

(84) Benannte Vertragsstaaten:
**AT BE CH DE FR GB IT LI LU NL SE**

(56) Entgegenhaltungen:
**EP-A- 0 079 324**
**DE-A- 2 528 983**
**DE-A- 2 645 057**
**DE-A- 2 754 455**
**DE-A- 3 018 471**
**GB-A- 2 084 430**

(73) Patentinhaber: **SIEMENS AKTIENGESELLSCHAFT ÖSTERREICH, Siemensstrasse 88 - 92, A-1210 Wien (AT)**

(72) Erfinder: **Stockinger, Helmut, Russbergstrasse 20/3/3, A-1210 Wien (AT)**
Erfinder: **Marek, Werner, Bahnstrasse 10a, A-1140 Wien (AT)**

## Beschreibung

Die Erfindung betrifft ein Tunnelantennensystem zur breitbandigen Signalübertragung mit einem Sender an einem Tunnelende und einem Empfänger am anderen Tunnelende, die miteinander durch ein Nachrichtenkabel verbunden sind, in das ein oder mehrere Koppelnetzwerke eingeschaltet sind, welche einerseits der Einspeisung der Sendersignale aus dem Nachrichtenkabel in zugeordnete Sendeantennen und anderseits der Einspeisung von im Tunnel abgestrahlten und über zugeordnete Empfangsantennen aufgenommenen Signalen in das Nachrichtenkabel dienen, wobei zwecks Unterdrückung von eigenerregten Schwingungen die Koppeldämpfung zwischen den Sende- und Empfangsantennen grösser ist als deren Übertragungsdämpfungen.

Bekanntlich werden für den Funkverkehr zwischen Fahrzeugen, die sich innerhalb eines Tunnels befinden und einer in der Tunnelwarte vorgesehenen Station Antennen innerhalb der Tunnelröhre verlegt, die einerseits als Sendeantennen zur Abwicklung des Funkverkehrs von der Tunnelwarte zu den Fahrzeugen und anderseits als Empfangsantennen für den Funkverkehr in umgekehrter Richtung dienen. Als Antennen werden hierzu entlang der Tunnelröhre verlegte Doppelleitungen oder «Strahlende Kabel» verwendet, die an einem Tunnelende von einem Sender der Tunnelwarte angespeist werden und die am anderen Tunnelende in einen der Tunnelwarte zugeordneten Empfänger für die von den Fahrzeugen ausgesendeten Signale münden. An den Antennen ergeben sich zufolge von Kabelverlusten sowie von äusseren Einflüssen, wie Staub-, Russ- und Streusalzablagerungen, ferner durch zusätzliche Betauung oder durch nasse Tunnelwände erhebliche elektrische Dämpfungen, so dass es erforderlich ist, in die Antenne in gewissen Abständen in Kaskade geschaltete geregelte Verstärker einzusetzen, die den Signalpegel abschnittsweise anheben. Solche Antennensysteme sind jedoch in Katastrophenfällen, z.B. bei einem Brand gefährdet, denn bei einer Zerstörung der Antenne an einer Stelle im Inneren des Tunnels bleibt die im Sinn der Signalübertragungsrichtung nachfolgende Tunnelstrecke unversorgt. Man hat daher vorgeschlagen, zwei solche Antennensysteme parallel zueinander, jedoch mit einander entgegengesetzten Signalübertragungsrichtungen innerhalb der Tunnelröhre anzuordnen. Abgesehen davon, dass diese Anordnung aufwendig ist, so hat sie überdies den Nachteil, dass auch Reparaturen von Schäden an der Antenne schwierig durchzuführen sind.

Ein mit «Strahlenden Kabeln» ausgestattetes Hochfrequenz-Verbindungssystem ist in der DE-A-31 37 021 beschrieben, das für beide Übertragungsrichtungen strahlende Übertragungsleitungen aufweist, die mit mehreren Ein-Richtungs-Verstärkern versehen sind, deren Verstärkung geringer ist als der Kopplungsgrad zwischen diesen Übertragungsleitungen. Dieses System ist ebenso wie alle anderen, mit «Strahlenden Kabeln» ausgerüsteten Systeme durch die oben erwähnten Umwelteinflüsse gefährdet.

Durch die EP-A-2 79 324 ist eine Breitband-Tunnelfunkanlage bekannt geworden, bei der die Sende- bzw. Empfangsgeräte an den beiden Tunnelenden durch ein gegen Beschädigungen geschützt verlegtes Nachrichtenkabel miteinander verbunden sind, an das in vorgegebenen Abständen Koppelnetzwerke angeschlossen sind, die einerseits die Sendersignale aus dem Nachrichtenkabel in zugeordnete Sendeantennen einspeisen und anderseits die von Fahrzeugen im Tunnel abgestrahlten und von zugeordneten Empfangsantennen aufgenommenen Signale dem Nachrichtenkabel zuführen. Diese an die einzelnen Koppelnetzwerke angeschlossenen Sende- und Empfangsantennen weisen nur den Abständen zwischen den Koppelnetzwerken entsprechend gleiche Längen auf und sind daher im Falle einer Beschädigung leichter auswechselbar als eine Antenne von der Länge des ganzen Tunnels und überdies tritt in diesem Fall auch keine Unterbrechung der Nachrichtenübertragung auf.

Bei diesem Antennensystem tritt jedoch so wie bei allen Antennensystemen, die zugleich senden und empfangen, das Problem der Schwingneigung bzw. der Eigenerregung zufolge der Kopplung zwischen den Sende- und Empfangssignalwegen auf, nämlich erfahrungsgemäss dann, wenn die Kreisdämpfung in dem von Verstärkungs- und Koppelelementen gebildeten signalübertragenden Kreis kleiner als 20 dB ist. Bei Antennenanlagen der eingangs angegebenen Art mit mehreren Koppelnetzwerken für die Signalübertragung vom Nachrichtenkabel zu den zugeordneten Antennen ist das Problem der Unterdrückung der Eigenerregung für jedes Koppelnetzwerk einzeln zu lösen, da innerhalb eines Tunnels die Koppel- und Dämpfungsverhältnisse an den verschiedenen Stellen (z.B. in Abhängigkeit vom Tunnelprofil oder aber von der Witterung) unterschiedlich sind. Die Erfindung hat sich daher die Aufgabe gestellt, die Koppelnetzwerke so aufzubauen und auszugestalten, dass unter Einhaltung optimaler Koppelbedingungen trotzdem die Schwingneigung ausreichend unterdrückt wird. Erfindungsgemäss wird dies dadurch erzielt, dass jedes Koppelnetzwerk je einen in das Nachrichtenkabel eingeschalteten, der Kompensation der Nachrichtenkabeldämpfung dienenden ersten Verstärker aufweist, an dessen Ausgang über ein erstes Koppelelement ein zweiter Verstärker mit einer in Abhängigkeit vom Kopplungsgrad zwischen Sende- und Empfangsantenne einstellbaren Verstärkung angeschlossen ist, dessen Ausgangssignal mittels eines ersten Signalverteilers in die Sendeantenne eingekoppelt ist und dass die von der Empfangsantenne aufgenommenen Signale mittels eines zweiten Signalverteilers aus der Empfangsantenne ausgekoppelt und mittels eines zweiten Koppelelementes dem Eingang des ersten Verstärkers zugefüht sind und dass die eingestellte Verstärkung des zweiten Verstärkers zusammen mit der vorgegebenen Verstärkung des ersten Verstärkers die vorwiegend durch die Koppeldämpfung zwischen Sende- und Empfangsantenne bestimmte Kreisdämpfung des Koppelnetzwerkes auf einen Wert, der grösser als 20 dB ist, reduziert.

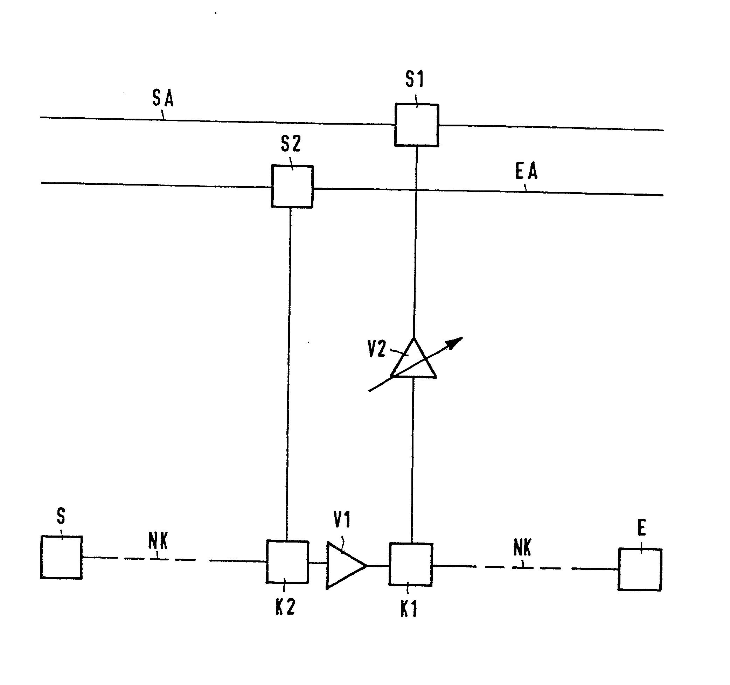

Als Ausführungsbeispiel der Erfindung ist in der Zeichnung eines von den Koppelnetzwerken einer Tunnelfunkanlage dargestellt, die entlang der Tunnelröhre in gleichen Abständen, z.B. von etwa 400 m, voneinander angeordnet sind. Mit NK ist ein von einem Sender S an einem Tunnelende zu einem Empfänger E am anderen Tunnelende führendes Nachrichtenkabel bezeichnet, das sowohl die von der Tunnelwarte an die zu den Fahrzeugen im Tunnel zu übertragenden Nachrichten vom Sender S aufnimmt als auch die von den Fahrzeugen abgestrahlten Nachrichten über den Empfänger E zur Tunnelwarte überträgt. Jedes der Koppelnetzwerke übermittelt einerseits die an die Fahrzeuge zu übertragenden Signale an eine zugeordnete Sendeantenne SA und anderseits die von einer zugeordneten Empfangsantenne EA empfangenen Signale der Fahrzeuge an das Nachrichtenkabel NK. Bei jedem Koppelnetzwerk ist in das Nachrichtenkabel NK ein Verstärker V1 eingeschaltet, dessen Verstärkung so bemessen ist, dass über das ganze Nachrichtenkabel NK hinweg vom Sender S bis zum Empfänger E ein etwa gleichbleibender Signalpegel aufrecht erhalten bleibt.

An den Ausgang des Verstärkers V1 ist über ein erstes Koppelelement K1, beispielsweise über einen Richtkoppler, ein zweiter Verstärker V2 angeschlossen, dessen Ausgang weiters über einen ersten Signalverteiler S1, beispielsweise einen Differentialübertrager, an die dem Koppelnetzwerk zugeordnete Sendeantenne SA angeschlossen ist. Die zugeordnete Empfangsantenne EA ist mit einem zweiten Signalverteiler S2 versehen, der gleichartig ausgebildet ist wie der erste Signalverteiler S1, jedoch den Signalfluss in umgekehrter Richtung über ein zweites Koppelelement K2 zum Nachrichtenkabel NK und zwar vor dem Eingang des ersten Verstärkers V1 leitet.

Zufolge des Umtandes, dass zwischen der Sendeantenne SA und der Empfangsantenne EA eine unvermeidbare Kopplung besteht, ergibt sich eine Kreisstruktur des Koppelnetzwerkes für einen allenfalls störenden Signalfluss über die Bauteile des Koppelnetzwerkes. Ein von der Empfangsantenne EA aufgenommenes Signal gelangt nämlich über den Signalverteiler S2, das Koppelelement K2, den Verstärker V1, das Koppelelement K1, den Verstärker V2 und den Signalverteiler S1 an die Sendeantenne SA und wird von dieser wieder in die Empfangsantenne EA eingespeist. Wenn die Gesamtdämpfung (Kreisdämpfung) im angegebenen Kreis der Bauelemente geringer ist als 20 dB, kommt es zu erheblichen Dämpfungsverzerrungen bis zu Schwingneigungen, die die normale Signalübertragung beeinträchtigen. Während die Dämpfungs- bzw. Verstärkungsmasse der in diesem Kreis eingeschalteten Bauelemente kalkulierbar und auch angenähert konstant sind, hängt das Dämpfungsmass der Koppelstrecke zwischen Sende- und Empfangsantenne von den jeweiligen örtlichen Gegebenheiten aber auch von der Witterung ab.

Bei Tunnelfunkanlagen mit mehreren erfindungsgemäss ausgebildeten Koppelnetzwerken ergibt sich eine einwandfreie Störungsunterdrückung dann, wenn die Kreisdämpfung grösser als 20 dB ist. Da die Kreisdämpfung vorwiegend von der Koppeldämpfung zwischen der Sendeantenne SA und der Empfangsantenne EA abhängt, welche wiederum den örtlichen Bedingungen unterliegt, ist zur genauen Einstellung der jeweiligen Kreisdämpfung ein Eingriff in die Verstärkungen bzw. Dämpfungen der Bauelemente des Koppelnetzwerkes erforderlich. Erfindungsgemäss wird dies dadurch erzielt, dass der Verstärker V2 so ausgebildet ist, dass seine Verstärkung verändert werden kann.

In der Praxis haben sich die folgenden Verstärkungs- und Dämpfungswerte bewährt:

Verstärkung der Verstärker V1 und V2 : +20 dB

Dämpfung der Koppelelemente K1 und K2 : −6 bis −14 dB

Dämpfung der Signalverteiler S1 und S2 : −3 bis −6 dB,

wenn die Kopplungsdämpfung zwischen den beiden Antennen SA und SE etwa −40 dB beträgt.

## Patentanspruch

Tunnelantennensytem zur breitbandigen Signalübertragung mit einem Sender (S) an einem Tunnelende und einem Empfänger (E) am anderen Tunnelende, die miteinander durch ein Nachrichtenkabel (NK) verbunden sind, in das ein oder mehrere Koppelnetzwerke eingeschaltet sind, welche einerseits der Einspeisung der Sendersignale aus dem Nachrichtenkabel in zugeordnete Sendeantennen (SA) und anderseits der Einspeisung von im Tunnel abgestrahlten und über zugeordnete Empfangsantennen (EA) aufgenommenen Signalen in das Nachrichtenkabel dienen, wobei zwecks Unterdrückung von eigenerregten Schwingungen die Koppeldämpfung zwischen den Sende- und Empfangsantennen grösser ist als deren Übertagungsdämpfungen, dadurch gekennzeichnet, dass jedes Koppelnetzwerk je einen in das Nachrichtenkabel (NK) eingeschalteten, der Kompensation der Nachrichtenkabeldämpfung dienenden ersten Verstärker (V1) aufweist, an dessen Ausgang über ein erstes Koppelelement (K1) ein zweiter Verstärker (V2) mit einer in Abhängigkeit vom Kopplunsgrad zwischen Sende- und Empfangsantenne einstellbaren Verstärkung angeschlossen ist, dessen Ausgangssignal mittels eines ersten Signalverteilers (S1) in die Sendeantenne (SA) eingekoppelt ist und dass die von der Empfangsantenne (EA) aufgenommenen Signale mittels eines zweiten Signalverteilers (S2) aus der Empfangsantenne (EA) ausgekoppelt und mittels eines zweiten Koppelelementes (K2) dem Eingang des ersten Verstärkers (V1) zugeführt sind und dass die eingestellte Verstärkung des zweiten Verstärkers (V2) zusammen mit der vorgegebenen Verstärkung des ersten Verstärkers

5      EP 0 181 314 B1      6

(V1) die vorwiegend durch die Koppeldämpfung zwischen Sende (SA)- und Empfangsantenne (EA) bestimmte Kreisdämpfung des Koppelnetzwerkes auf einen Wert, der grösser als 20 dB ist, reduziert.

**Revendication**

Système d'antennes pour la transmission de signaux à large bande dans un tunnel et comportant un émetteur (S) placé à une extrémité du tunnel et un récepteur (E) placé à l'autre extrémité du tunnel, cet émetteur et ce récepteur étant reliés entre eux par l'intermédiaire d'un câble (NK) de transmission d'informations, dans lequel sont branchés un ou plusieurs réseaux de couplage qui servent d'une part à introduire les signaux de l'émetteur provenant du canal de transmission d'informations dans des antennes associées d'émission (SA) et d'autre part à introduire des signaux émis dans le tunnel et reçus par l'intermédiaire d'antennes associées de réception (EA), dans le câble de transmission d'informations, auquel cas, pour la suppression d'oscillations produites par auto-excitation, l'affaiblissement de couplage entre l'antenne d'émission et l'antenne de réception est supérieur aux affaiblissements de transmission de ces antennes, caractérisé par le fait que chaque réseau de couplage comporte un premier amplificateur respectif (V), qui est branché dans le câble (NK) de transmission d'informations, sert à compenser l'affaiblissement du câble de transmission d'informations et à la sortie duquel se trouve raccordé, par l'intermédiaire d'un premier élément de couplage (K1), un second amplificateur (V2) qui possède une amplification réglable en fonction du degré de couplage entre l'antenne d'émission et l'antenne de réception et dont le signal de sortie est injecté au moyen d'un premier distributeur de signaux (S1) dans l'antenne d'émission (SA), et que les signaux reçus par l'antenne de réception (EA) sont extraits de l'antenne de réception (EA) au moyen d'un second distributeur de signaux (S2) et sont envoyés à l'entrée du premier amplificateur (V1) au moyen d'un second élément de couplage (K2), et que l'amplification réglée du second amplificateur (V2) réduit, conjointement avec l'amplification prédéterminée du premier amplificateur (V1), l'affaiblissement de boucle du réseau de couplage, déterminé de façon prépondérante par l'affaiblissement de couplage entre l'antenne d'émission (SA) et l'antenne de réception (EA), à une valeur supérieure à 20 dB.

**Claim**

Tunnel antenna system for wide-band signal transmission with a transmitter (S) at one tunnel end and a receiver (E) at the other tunnel end, which ends are connected with each other by means of a communication cable (NK) into which one or several coupling networks re connected, which networks serve, on the one hand, to feed the transmitter signals from the communication cable into associated transmitting antennae (SA) and, on the other hand, to feed signals, radiated in the tunnel and received via associated receiving antennae (EA), into the communication cable, in which case for the purpose of suppressing self-excited oscillations the coupling attenuation between the transmitting and receiving antennae is greater than their transmission attenuation, characterised in that each coupling network has, in each case, a first amplifier (V1) which is connected into the communication cable (NK), serves to compensate the communication cable attenuation and at the output of which there is connected via a first coupling element (K1) a second amplifier (V2) with amplification which can be adjusted as a function of the degree of coupling between transmitting and receiving antenna, the output signal of the latter being coupled by means of a first signal distributor (S1) into the transmitting antenna (SA) and in that the signals received by the receiving antenna (EA) are coupled out of the receiving antenna (EA) by means of a second signal distributor (S2) and supplied by means of a second coupling element (K2) to the input of the first amplifier (V1) and in that the adjusted amplification of the second amplifier (V2) together with the given amplification of the first amplifier (V1) reduces the circuit attenuation of the coupling network, mainly determined by the coupling attenuation between transmitting (SA) and receiving antenna (EA), to a value which is greater than 20 dB.

1/1